Europäisches Patentamt

European Patent Office

Office européen des brevets

(19)

(11) **EP 1 170 264 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(51) Int Cl.⁷: **C03C 10/00**

(21) Anmeldenummer: **00114268.6**

(22) Anmeldetag: **04.07.2000**

(54) **Transluzente Glaskeramik, Verfahren zur Herstellung einer transluzenten Glaskeramik sowie deren Verwendung**

Translucent glass-ceramic, process for manufacturing a translucent glass-ceramic as well as its application

Vitrocéramique translucide, procédé pour fabriquer une vitrocéramique translucide et utilisation de celle-ci

(84) Benannte Vertragsstaaten:
**AT BE CH CY DE DK ES FI FR GB GR IE IT LI LU MC NL PT SE**

(43) Veröffentlichungstag der Anmeldung:
**09.01.2002 Patentblatt 2002/02**

(73) Patentinhaber: **Schott Glas**
**55122 Mainz (DE)**

(72) Erfinder:
- **Mitra, Ina, Dr.**
**55271 Stadecken-Elsheim (DE)**
- **Siebers, Friedrich, Dr.**
**55283 Nierstein (DE)**
- **Becker, Otmar, Dr.**
**63225 Langen (DE)**
- **Schminke, Andreas, Dr.**
**64331 Weiterstadt (DE)**
- **Rüdinger, Bernd, Dr.**
**55126 Mainz (DE)**
- **Roos, Christian**
**55116 Mainz (DE)**
- **Weiss, Evelin, Dr.**
**55131 Mainz (DE)**
- **Dudek, Roland**
**55545 Bad Kreuznach (DE)**
- **Rodek, Erich, Dr.**
**55126 Mainz (DE)**
- **Schröder, Georg-Friedrich**
**55218 Ingelheim (DE)**

(56) Entgegenhaltungen:
**EP-A- 0 220 333**      **EP-A- 0 536 478**
**EP-A- 0 711 737**      **EP-A- 1 029 830**
**DE-A- 3 345 316**      **US-A- 3 573 074**
**US-A- 4 211 820**      **US-A- 4 218 512**
**US-A- 5 491 115**

- **NORDMANN A ET AL: "CRYSTALLIZATION BEHAVIOUR AND MICROSTRUCTURAL EVOLUTION OF LI2O-AL2O3-SIO2 GLASS DERIVED FROM SPODUMENE MINERAL" JOURNAL OF MATERIALS SCIENCE,GB,CHAPMAN AND HALL LTD. LONDON, Bd. 32, Nr. 1, 1997, Seiten 83-89, XP000640798 ISSN: 0022-2461**
- **RAMOS A ET AL: "EARLIEST STAGES OF CRYSTAL GROWTH IN A SILICATE GLASS CONTAINING TITANIUM AND ZIRCONIUM AS NUCLEATING ELEMENTS - HRTEM AND XAS STUDY" JOURNAL OF CRYSTAL GROWTH,NL,NORTH-HOLLAND PUBLISHING CO. AMSTERDAM, Bd. 100, Nr. 3, 1. März 1990 (1990-03-01), Seiten 471-480, XP000126003 ISSN: 0022-0248**
- **DATABASE EPODOC [Online] EUROPEAN PATENT OFFICE, THE HAGUE, NL; KANG WON-HO (KR): XP002162585 & KR 9 709 316 B (KANG WON HO) 10. Juni 1997 (1997-06-10)**
- **SCHEIDLER H ET AL: "LI2O-AL2O3-SIO2 GLASS-CERAMICS" AMERICAN CERAMIC SOCIETY BULLETIN,US,AMERICAN CERAMIC SOCIETY. COLUMBUS, Bd. 68, Nr. 11, 1. November 1989 (1989-11-01), Seiten 1926-1930, XP000126064 ISSN: 0002-7812**

- JEWELL J M ET AL: "EFFECT OF HEAT-TREATMENT TEMPERATURE ON THE PROPERTIES OF A LITHIUM ALUMINOSILICATE GLASS" JOURNAL OF THE AMERICAN CERAMIC SOCIETY,US,AMERICAN CERAMIC SOCIETY. COLUMBUS, Bd. 74, Nr. 1, 1991, Seiten 92-97, XP000214649 ISSN: 0002-7820

**Beschreibung**

Die Erfindung hat eine transluzente Glaskeramik, ein Verfahren zur deren Herstellung sowie deren Verwendung zum Gegenstand.

Es ist bekannt, dass sich Gläser aus dem System $Li_2O-Al_2O_3-SiO_2$ in Glaskeramiken (LAS-Glaskeramiken) mit Hochquarz-Mischkristallen und/oder Keatit-Mischkristallen als Hauptkristallphasen umwandeln lassen. Die Herstellung dieser Glaskeramiken erfolgt in verschiedenen Stufen. Nach der Schmelze und Heißformgebung wird das Material üblicherweise unter die Transformationstemperatur abgekühlt. Anschließend wird das Ausgangsglas durch gesteuerte Kristallisation in einen glaskeramischen Artikel überführt. Diese Keramisierung erfolgt in einem mehrstufigen Temperaturprozess, bei dem zunächst durch Keimbildung bei der Temperatur zwischen ca. 600 - 800 °C Keime, üblicherweise aus $TiO_2$- oder $ZrO_2/TiO_2$-Mischkristallen, erzeugt werden, auch $SnO_2$ kann an der Keimbildung beteiligt sein. Bei der anschließenden Temperaturerhöhung wachsen bei der Kristallisationstemperatur von ca. 750 - 900 °C zunächst Hochquarz-Mischkristalle auf diesen Keimen auf. Bei weiterer Temperaturerhöhung im Bereich von ca. 900-1200 °C wandeln sich diese Hochquarz-Mischkristalle weiter in Keatit-Mischkristalle um. Die Umwandlung in Keatit-Mischkristalle ist mit einem Kristallwachstum, d.h. zunehmender Kristallitgröße verbunden, wodurch zunehmend Lichtstreuung erfolgt, d.h. die Lichttransmission wird zunehmend verringert. Der glaskeramische Artikel erscheint dadurch zunehmend transluzent und schließlich opak. Die Glaskeramiken mit Hochquarz-Mischkristallen sind üblicherweise transparent, durch Verringerung der Keimbildnergehalte lassen sich auch hier transluzente Glaskeramiken herstellen.

Eine Schlüsseleigenschaft dieser Glaskeramiken ist, dass mit ihnen Werkstoffe herzustellen sind, die über einen äußerst niedrigen Wärmeausdehnungskoeffizienten im Bereich von Raumtemperatur bis ca. 700 °C von < $1,5 \cdot 10^{-6}$/K verfügen. Mit Glaskeramiken, die Hochquarz-Mischkristalle als Hauptkristallphase enthalten, lassen sich in einem vorgegebenen Temperaturbereich z. B. zwischen Raumtemperatur und 700 °C sogar Werkstoffe mit nahezu Nullausdehnung realisieren.

Diese Glaskeramiken finden in transparenter Form Anwendung z.B. als Brandschutzglas, Kaminsichtscheiben oder Kochgeschirr. Für die Anwendung als Kochfläche ist eine Absenkung der Lichttransmission erwünscht, um die Durchsicht auf die technischen Aufbauten unter der Kochfläche zu vermeiden. Diese Absenkung der Lichttransmission wird z.B. durch Einfärbung transparenter Glaskeramiken sowie durch transluzent oder opak umgewandelte Glaskeramiken erreicht.

So ist beispielsweise aus der WO 99/06334 eine transluzente Glaskeramik bekannt, die einen Trübungsgrad von wenigstens 50 %, aufweist. Weiterhin beansprucht die WO 99/06334 eine entsprechende transluzente Glaskeramik mit einen Transmission im Sichtbaren von 5 bis 40 %. Die genannten transluzenten Glaskeramiken enthalten dabei entweder β-Spodumen (Keatit-Mischkristalle) als vorherrschende Kristallphase oder ausschließlich β-Spodumen als einzige Kristallphase.

Die EP 0 437 228 A1 beschreibt eine transparente Glaskeramik mit β-Quarz-Mischkristallen (Hochquarz-Mischkristallen) als vorherrschende Kristallphase oder eine weiße opake Glaskeramik mit β-Spodumen-Mischkristallen (Keatit-Mischkristallen) als vorherrschende Kristallphase.

Die in der Schrift EP 536 478 A1 beschriebene variabel-transluzente Glaskeramik enthält neben Bereichen mit β-Quarz-Mischkristallen Bereiche mit β-Spodumen/Gahnit-Mischkristallen. Diese Gahnit-Mischkristalle ($ZnO \cdot Al_2O_3$) entstehen bei der Phasentransformation von β-Quarz-Mischkristallen in β-Spodumen-Mischkristalle und kompensieren die mit dieser Phasentransformation verbundene Dichteänderung. Damit wird die unmittelbare Nachbarschaft von transparenten, transluzenten und opaken Bereichen in einem glaskeramischen Artikel ermöglicht. In den transluzenten und den opaken Bereichen sind Keatit-Mischkristalle die Hauptkristallphase. Gahnit-Kristalle weisen eine wesentlich höhere thermische Ausdehnung auf als die genannten Mischkristallphasen (Hochquarz bzw. Keatit) von typischen LAS-Glaskeramiken. Es ist zu erwarten, daß ein derartig variabel kristallisiertes Produkt Nachteile bei der Stoßfestigkeit hat und aufgrund der unterschiedlichen Ausdehnungscharakteristika im Gebrauch vorzeitig Risse im Gefüge aufweist.

Aus der US 4,211,820 sind im wesentlichen transparente Glaskeramiken mit leichter Trübung bekannt, mit β-Spodumen-Mischkristallen als vorherrschende Kristallphase im Inneren der Glaskeramik. Mittels 0,02 bis 0,2 Gew.-% $V_2O_5$ sind die dort beanspruchten transparenten Glaskeramiken braun eingefärbt. Eine vergleichbare Glaskeramik ist aus der US 4,218,512 bekannt.

Es ist Aufgabe der Erfindung, eine transluzente Glaskeramik sowie ein Verfahren zur Herstellung einer transluzenten Glaskeramik zu finden, wobei die Glaskeramik eine Lichttransmission von 0,5 - 10 % bei 4 mm Probendicke, eine Stoßfestigkeit von größer 18 cm Bruchfallhöhe im Mittelwert geprüft mit einer 200 g schweren Stahlkugel im Kugelfalltest, und hohe Werte der Temperaturunterschiedsfestigkeit von größer 650 °C besitzen soll.

Diese Aufgabe wird durch eine Glaskeramik gemäß Anspruch 1 sowie ein Verfahren gemäß Anspruch 14 gelöst.

Die erfindungsgemäße transluzente Glaskeramik weist dabei

- eine Lichttransmission im Sichtbaren von 0,5 bis 10 % bei 4 mm Probendicke,
- eine Stoßfestigkeit von größer 18 cm Bruchfallhöhe im Mittelwert geprüft mit einer 200 g schweren Stahlkugel im Kugelfalltest,
- eine Temperaturunterschiedsfestigkeit von größer 650 °C, vorzugsweise von größer 700 °C,
- Keatit-Mischkristallen als vorherrschende Kristallphase im Innern der Glaskeramik,
- Hochquarz-Mischkristallen als weitere Kristallphase in der Oberflächenschicht der Glaskeramik,
- eine thermischen Ausdehnung der Hochquarz-Mischkristalle die kleiner als die der Keatit-Mischkristalle ist, so dass ein Oberflächenzustand der Glaskeramik erzeugt wird, der der Entstehung von festigkeitsemiedrigenden Oberflächenverletzungen entgegenwirkt und,
- einen $SiO_2$-Gehalt der Hochquarz-Mischkristalle der kleiner als 80 Gew.-% ist, so dass beim Abkühlen der Glaskeramik auf Raumtemperatur die Umwandlung der Hochquarz-Mischkristallphase zu einer unerwünschten Tiefquarz-Mischkristallphase, die zu Rissen in der Oberfläche der Glaskeramik führt, verhindert wird,

auf.

Bei dem erfindungsgemäßen Verfahren zur Herstellung einer transluzenten Glaskeramik mit einer Lichttransmission im Sichtbaren von 0,5 - 10 % bei 4 mm Probendicke, einer Stoßfestigkeit von größer 18 cm Bruchfallhöhe im Mittelwert geprüft mit einer 200g schweren Stahlkugel im Kugelfalltest, einer Temperaturunterschiedsfestigkeit von größer 650 °C, vorzugsweise von größer 700 °C, mit Keatit-Mischkristallen als vorherrschende Kristallphase im Innern der Glaskeramik, mit Hochquarz-Mischkristallen als Kristallphase in der Oberflächenschicht der Glaskeramik, einer thermischen Ausdehnung der Hochquarz-Mischkristalle die kleiner als die der Keatit-Mischkristalle ist, so dass ein Oberflächenzustand der Glaskeramik erzeugt wird, der der Entstehung von festigkeitserniedrigenden Oberflächenverletzungen entgegenwirkt, einem $SiO_2$-Gehalt der Hochquarz-Mischkristalle der größer als 80 Gew.-% ist, so dass beim Abkühlen der Glaskeramik auf Raumtemperatur die Umwandlung der Hochquarz-Mischkristallphase zu einer unerwünschten Tiefquarz-Mischkristallphase, die zu Rissen in der Oberfläche der Glaskeramik führt, verhindert wird, wird der Schichtaufbau mit Keatit-Mischkristallen als vorherrschende Kristallphase im Innern der Glaskeramik und Hochquarz-Mischkristallen als weitere Kristallphase in der Oberflächenschicht der Glaskeramik dadurch erzeugt, dass der Temperaturbereich der Keimbildung von Zr/Ti-haltigen Keimkristallen von 650 bis 760 °C mit hohen Heizraten von größer 7 K/min durchfahren wird, die Kristallisation der Hochquarz-Mischkristallphase bei einer Temperatur von 760 bis 850 °C durchgeführt wird, und die Aufenthaltszeit im Temperaturbereich zwischen 650 bis 850 °C weniger als 60 Minuten beträgt.

Bei der Kristallisation der Hochquarz-Mischkristallphase im Temperaturbereich von 760 bis 850 °C kann die Glaskeramik bei einer bestimmten Temperatur gehalten werden, der Temperaturbereich kann aber auch wenigstens zum Teil durchfahren werden.

Bevorzugt weist die erfindungsgemäße Glaskeramik bzw. die nach dem erfindungsgemäßen Verfahren hergestellte Glaskeramik Hochquarz-Mischkristalle als vorherrschende Kristallphase in der Oberflächenschicht der Glaskeramik auf.

Die Temperaturunterschiedsfestigkeit bei der Glaskeramik ist durch folgenden Zusammenhang gegeben:

$$\Delta T = \frac{\sigma_g \cdot (1 - \mu)}{\alpha \cdot E}.$$

Dabei entspricht $\Delta T$ der Temperaturunterschiedsfestigkeit, $\mu$ ist die Poissonzahl, E der E-Modul, $\alpha$ der Wärmeausdehnungskoeffizient (thermische Ausdehnung) und $\sigma_g$ ist die Festigkeit, für die der Wert eingesetzt werden muss, der sich im praktischen Gebrauch bedingt durch Oberflächenverletzungen einstellt.

Da die thermische Ausdehnung der Hochquarz-Mischkristalle kleiner als die der Keatit-Mischkristalle ist, so dass ein Oberflächenzustand der Glaskeramik erzeugt wird, der der Entstehung von festigkeitserniedrigenden Oberflächenverletzungen entgegen wirkt, wird vermutlich eine Druckspannung an der Oberfläche der Glaskeramik erzeugt, die sowohl äußeren Zugspannungen durch Stoßbelastungen als auch der Erzeugung von festigkeitsemiedrigenden Oberflächenverletzungen im praktischen Gebrauch entgegen wirkt. Hierdurch stellt sich ein höherer Wert der Festigkeit nach praxisüblicher Verletzung ein. Dieser Effekt ist auch bekannt bei Druckspannungen, die durch chemisches Vorspannen, z. B. durch den Austausch von Kalium gegen Natrium, in Gläsern erzeugt werden. Das chemische Vorspannen ist allerdings z.B. bei Kochflächen nicht möglich, weil die Druckspannungen durch die hohen Temperaturen in den Kochzonen wieder abgebaut werden.

Zum Erreichen einer hohen Temperaturunterschiedsfestigkeit sollte im wesentlichen die Festigkeit nach praxisüblicher Verletzung $\sigma_g$ hoch und der Wärmeausdehnungskoeffizient $\alpha$ klein sein. E-Modul und Poissonzahl können nur in geringerem Maße durch die Zusammensetzung und die Herstellung beeinflusst werden. So ist es vorteilhaft, wenn die thermische Ausdehnung der Glaskeramik zwischen Raumtemperatur und 700 °C kleiner als $1{,}3 \cdot 10^{-6}$/K be-

vorzugt kleiner als 1,1·10$^{-6}$/K ist.

Simulationsrechnungen einer plattenförmigen Kochfläche aus der erfindungsgemäßen transluzenten Glaskeramik mit Finite-Elemente-Methoden zeigen, dass im bestimmungsgemäßen Gebrauch der Kochzonen an der Plattenaußenkante tangentiale Zugspannungen entstehen. Bei den erfindungemäßen Umwandlungsverfahren wird an der Plattenaußenkante ein Oberflächenzustand erzeugt, der auch nach Gebrauchsverletzung eine hohe Festigkeit $\sigma_g$ hat. Daraus resultiert für die Anwendung als Kochfläche eine ausreichend hohe Temperaturunterschiedsfestigkeit.

Um die Glaskeramik vor dem Angriff von Säure auf die Hochquarz-Mischkristalle zu schützen ist es vorteilhaft, wenn an der unmittelbaren Oberfläche oberhalb der Hochquarz-Mischkristalle eine ca. 100 bis 600 nm dicke glasige Schicht erzeugt wird. In dieser glasigen Schicht sind die Komponenten die nicht in die Hochquarz-Mischkristalle eingebaut werden, z.B. Akalioxide, wie z. B. $Na_2O$, $K_2O$ und Erdalkalioxide wie z.B. CaO, SrO, BaO, angereichert. Für die Erzeugung der schützenden glasigen Schicht sollten daher die genannten Alkali- und Erdalkalioxide Bestandteile der Zusammensetzung sein. Es ist bekannt, dass Hochquarz-Mischkristalle durch den Angriff von Säuren zerstört werden können, indem das Lithium durch Protonen der Säure ersetzt wird. Mit der Zerstörung der Hochquarz-Mischkristalle in der oberflächennahen Schicht geht auch deren positiver Einfluss auf die Temperaturunterschiedsfestigkeit verloren.

Der beschriebene Schichtaufbau mit einer ca. 100 bis 600 nm dicken glasigen Schicht, einer oberflächennahen Schicht mit Hochquarz-Mischkristallen und den Keatit-Mischkristallen im Inneren der Glaskeramik kann bei der Keramisierung der Glaskeramik erzeugt werden, indem der Temperaturbereich der Keimbildung von Zr/Ti-haltigen Keimkristallen von 650 bis 760 °C mit hohen Heizraten von größer 7 K/min durchfahren wird und die Kristallisation der Hochquarz-Mischkristallphase bei einer Temperatur von ca. 760 bis 850 °C durchgeführt wird. Bei plattenförmigen Ausgangsgläsem hat es sich zur Vermeidung von Unebenheiten bedingt durch ungleichmäßige Kristallisation in der Platte als vorteilhaft erwiesen, wenn die Heizrate zwischen 760 und 850 °C verlangsamt wird oder eine Haltezeit eingeführt wird. Insgesamt sollte die Aufenthaltszeit im Temperaturenbereich zwischen 650 bis 850 °C weniger als 60 Minuten betragen, ansonsten wurde eine Verschlechterung der Temperaturunterschiedsfestigkeit beobachtet.

Das Temperaturmaximum des Herstellprozesses liegt bei Temperaturen von 1000 bis 1100 °C. Hierbei erfolgt die Umwandlung in die erfindungsgemäße transluzente Glaskeramik mit einer Lichttransmission von 0,5 bis 10 % bei 4 mm Probendicke. Die Aufheizraten und die Haltezeit bei Maximaltemperatur müssen nun so gewählt werden, dass zum einen die gewünschte Transluzenz, d.h. Lichttransmission von 0,5 bis 10 % bei 4 mm Probendicke entsteht. Zum anderen darf die Haltezeit nicht soweit verlängert werden, dass die Hochquarz-Mischkristallphase in der Oberfläche unzulässig hohe $SiO_2$-Gehalte besitzen. $SiO_2$-Gehalte in der Größenordnung von > 80 % können dazu führen, dass beim Abkühlen eine Umwandlung von der Hochquarz- in die Tiefquarzstruktur erfolgt. Es wird beobachtet, dass sich die Zusammensetzung der Hochquarz-Mischkristalle mit der Haltezeit verändert. Mit zunehmender Haltezeit werden die Hochquarz-Mischkristallphase zunehmend $SiO_2$-reicher, sodass die Haltezeit bei Maximaltemperaturen verfahrenstechnisch begrenzt werden muss. Die zulässige Haltezeit hängt ab von der Zusammensetzung der Glaskeramik, der Aufheizrate und der Höhe der Maximaltemperatur.

Für die verfahrenstechnische Ermittlung der zulässigen Haltezeit bei gegebener Maximaltemperatur und Aufheizrate, kann die Dünnschichtröntgenbeugung herangezogen werden. Durch Messung mit streifendem Einfall, Winkel ca. 0,6°, wird die kristalline Quarzphase in der Oberfläche erfasst. Hauptreflexe der kristallinen Quarzphase liegen bei 2θ-Werten von 20,5 und 26°. Aus den Beugungsdiagrammen läßt sich die a-Gitterkonstante der jeweiligen kristallinen Quarzphase bestimmen. Die a-Gitterkonstante der Elementarzelle gibt den $SiO_2$-Gehalt der Quarzphase wieder. Niedrige a-Gitterkonstanten stehen für hohe $SiO_2$-Gehalte. Für jede Glaskeramik-Zusammensetzung lässt sich ein Grenzwert für die a-Gitterkonstante ermitteln, bei dem, bedingt durch hohe $SiO_2$-Gehalte von > 80% in der Quarzphase beim Abkühlen, die unerwünschte Umwandlung in die Tiefquarzstruktur erfolgt. Die Grenzwerte für die a-Gitterkonstante liegen in der Größenordnung 5,00 bis 5,04 Å.

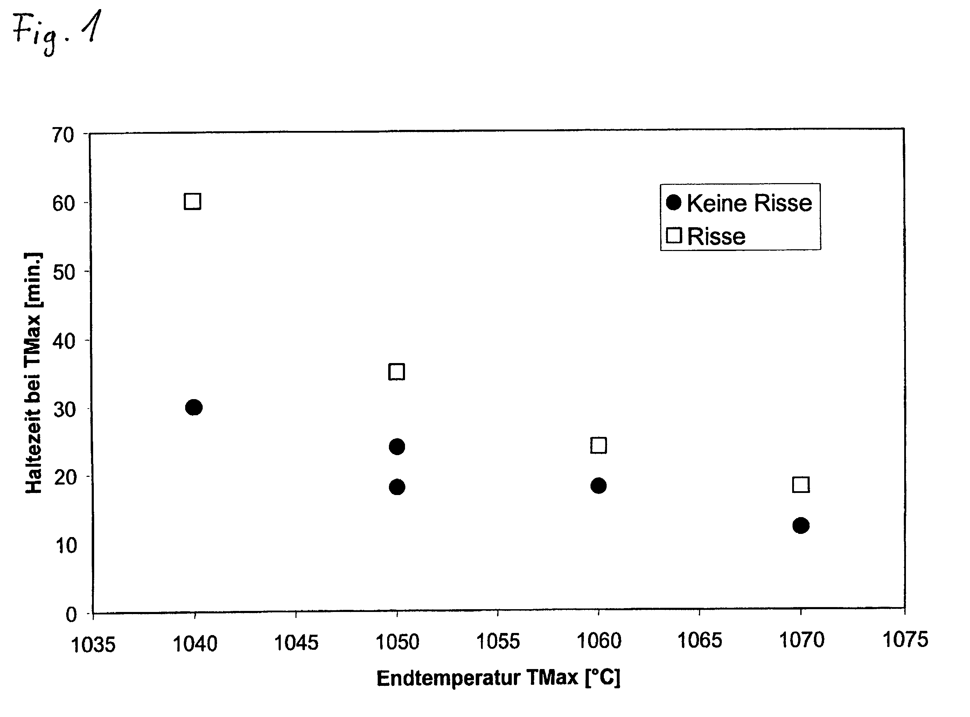

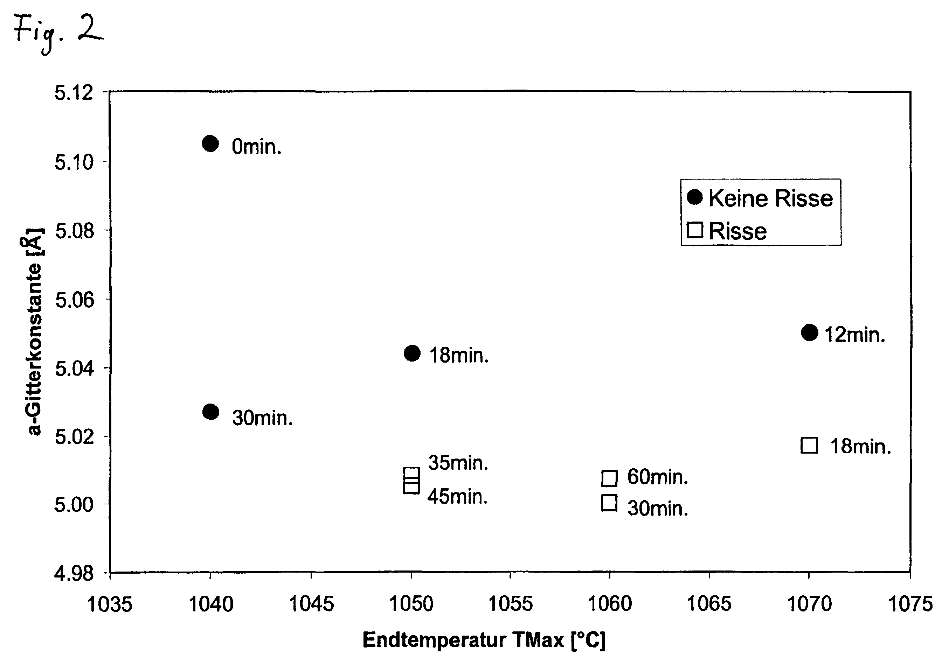

Die Umwandlung der Hochquarz-Mischkristalle in die Tiefquarzstruktur muss unbedingt vermieden werden, weil es dabei zu einer Volumenkontraktion und aufgrund der hohen thermischen Ausdehnung des Tiefquarzes, verglichen mit der Keatit-Mischkristallphase im Innern der Glaskeramik, zu hohen Spannungen in der Oberfläche kommt. Durch die hohen Zugspannungen werden Oberflächenrisse in dem Glaskeramikartikel erzeugt, die die Stoßfestigkeit drastisch unter den erforderlichen Wert erniedrigen. Die Vermeidung von Oberflächenrissen ist ausschlaggebend für das Erreichen der hohen geforderten Stoßfestigkeiten von 18 cm im Mittelwert geprüft mit einer 200 g schweren Stahlkugel im Kugelfalltest in Anlehnung an DIN 52306. Über die mikroskopisch nachweisbaren Oberflächenrisse und die damit verbundene Erniedrigung der Stoßfestigkeit, kann die Umwandlung der oberflächennahen Hochquarz-Mischkristalle in die Tiefquarzstruktur zuverlässig erkannt werden. Mit dieser Methode ist es möglich, die zulässige Haltezeit bei vorgegebener Maximaltemperatur und Aufheizrate empirisch zu bestimmen. Figur 1 zeigt für eine bestimmte Zusammensetzung (Glas Nr. 1 in Tabelle 1), wie die Oberflächenrisse als Folge von unzulässig verlängerten Haltezeiten bei vorgegebener Aufheizrate und Maximaltemperatur auftreten. Für jede Glaskeramik-Zusammensetzung lässt sich damit auch der jeweilige Grenzwert für die mit Dünnschichtröntgenbeugung gemessene a-Gitterkonstante bestimmen. Dies ist in Figur 2 für die mit Figur 1 identischen Proben gezeigt. Der kritische $SiO_2$-Gehalt für die unerwünschte Umwandlung der Hochquarz-Mischkristalle in die Tiefquarzstruktur liegt bei diesem Beispiel bei Werten der Gitterkonstante von a < ca. 5,02 Å.

Für das Erreichen einer hohen Temperaturunterschiedsfestigkeit hat es sich als günstig erwiesen, wenn die mittlere Korngröße der Keatit-Mischkristalle im Inneren der Glaskeramik 0,3 μm bis 2 μm und bevorzugt 1 bis 1,5 μm beträgt. Die Obergrenze erklärt sich daraus, dass bei größeren mittleren Korngrößen, also grobem Gefüge, ungünstig hohe Mikrospannungen entstehen. Die mittlere Korngröße sollte nicht weniger als 0,3 μm bevorzugt nicht weniger als 1 μm betragen, weil sonst die Fortpflanzung von Rissen geometrisch nicht genügend behindert wird. In dem Bereich mittlerer Korngröße von 0,3 bis 2 μm wird über das bekannte Phänomen der Rissverzweigung offenbar eine hohe Festigkeit bei praxisüblicher Verletzung $\sigma_g$ erreicht.

Eine erfindungsgemäße Glaskeramik ist bevorzugt gekennzeichnet durch eine Zusammensetzung in Gew.-% auf Oxidbasis von $Li_2O$ 3,0-4,0, $Na_2O$ 0-1,0, $K_2O$ 0-0,6, $\Sigma$ $Na_2O+K_2O$ 0,2-1,0, MgO 0-1,5, CaO 0-0,5, SrO 0-1,0, BaO 0-2,5, $\Sigma$ CaO+SrO+BaO 0,2-3,0, ZnO 1,0-2,2, $Al_2O_3$ > 19,8-23, $SiO_2$ 66-70, $TiO_2$ 2,0-3,0, $ZrO_2$ 0,5-2,0 und $P_2O_5$ 0-1,0.

Für die Ausbildung des erfindungsgemäßen Gefügeaufbaus der transluzenten Glaskeramik sind $Li_2O$, ZnO, $Al_2O_3$ und $SiO_2$ in den angegebenen Grenzen notwendig. Diese Komponenten sind Bestandteile der Hochquarz- und Keatit-Mischkristalle. Die relativ engen Grenzen sind notwendig, damit sich der gewünschte Gefügeaufbau ausbildet. Der $Al_2O_3$-Gehalt soll > 19,8 Gew.-% betragen, weil sonst unerwünscht hohe $SiO_2$-Gehalte der oberflächennahen Hochquarz-Mischkristalle begünstigt werden. Der $Al_2O_3$-Gehalt beträgt weniger als 23 Gew.-%, weil hohe $Al_2O_3$-Gehalte bei der Formgebung der Schmelze zu unerwünschter Entglasung von Mullit führen können. Als weitere Komponenten können MgO und $P_2O_5$ eingebaut werden. Die Zugabe der Alkalien $Na_2O$, $K_2O$ sowie der Erdalkalien CaO, SrO, BaO verbessert die Schmelzbarkeit und das Entglasungsverhalten des Glases bei der Herstellung. Die Gehalte sind begrenzt, weil diese Komponenten im wesentlichen in der Restglasphase der Glaskeramik verbleiben und die thermischen Ausdehnung bei zu hohen Gehalten in unerwünschter Weise erhöhen. Die angegeben Mindestsummen der Alkalien bzw. Erdalkalien sind erforderlich, damit sich der erfindungsgemäße Gefügeaufbau ausbilden kann. Der $TiO_2$-Gehalt beträgt zwischen 2 und 3 Gew.-%, der $ZrO_2$-Gehalt beträgt zwischen 0,5 und 2 Gew.-%. Beide sind als Keimbildner unverzichtbar. Die transluzente Glaskeramik kann bei der Herstellung durch Zusatz üblicher Läutermittel, wie z.B. $As_2O_3$, $Sb_2O_3$, $SnO_2$, $CeO_2$, Sulfat- bzw. Chloridverbindungen, hergestellt werden.

Die erfindungsgemäße transluzente Glaskeramik kann in verschiedenen Farbtönen entsprechend den Erfordernissen und Wünschen des Marktes hergestellt werden. Wenn ein hoher Weißwert im Lab-System von L* > 83 gewünscht wird, muss bei der Herstellung der Gehalt an färbenden Verunreinigungen hier insbesondere $V_2O_5$, $MoO_3$, CoO und NiO auf äußerst niedrige Werte begrenzt werden. So sollte $V_2O_5$ < 15 ppm, $MoO_3$ < 20 ppm, CoO < 10 ppm, NiO < 10 ppm und die Gesamtsumme der genannten Farboxide < 30 ppm betragen. Wenn dagegen bestimmte Einfärbungen des weißen Farbtons gewünscht werden, können übliche färbende Komponenten wie z.B. V-, Cr-, Mn-, Ce-, Fe-, Co-, Cu-, Ni-, Se-, Cl-Verbindungen eingesetzt werden, um bestimmte Farborte im Lab-System zu erreichen. Für das Einstellen eines beigen Farbtons hat sich insbesondere der Zusatz von $CeO_2$, $MnO_2$, $Fe_2O_3$ einzeln oder in Kombination als färbende Komponenten bewährt.

Aus wirtschaftlichen Gründen ist es vorteilhaft, wenn aus der gleichen Zusammensetzung neben der transluzenten Glaskeramik auch eine opake Glaskeramik mit Lichttransmission < 0,5 % bei 4 mm Dicke hergestellt werden kann. Hierbei ist es günstig die Umwandlung in eine opake Glaskeramik mit Keatit-Mischkristall bei höheren Temperaturen durchzuführen, da sich hierdurch die oberflächennahen Hochquarz-Mischkristalle abbauen lassen und die Problematik des Tiefquarz-Phasenübergangs bei $SiO_2$-reichen Hochquarz-Mischkristallen, wie sie mit verlängerter Haltezeit verbunden ist, umgangen werden kann. Mit den opaken Glaskeramiken lässt sich eine weitere Ausführungsform realisieren.

Es ist weiterhin wirtschaftlich vorteilhaft, wenn aus der gleichen Zusammensetzung aus die der transluzente Glaskeramik besteht, auch eine transparente Glaskeramik mit Hochquarz-Mischkristallen als vorherrschender Kristallphase und einer Transmission bei 4 mm Probendicke von > 80 % hergestellt werden kann. Dies ist möglich, wenn man nach der Kristallisation des Hochquarz-Mischkristalls auf eine Temperaturerhöhung für die Umwandlung in eine Keatit-Mischkristalle enthaltene transluzente Glaskeramik verzichtet.

Vorzugsweise findet eine erfindungsgemäße Glaskeramik bzw. eine nach dem erfindungsgemäßen Verfahren hergestellte Glaskeramik, Verwendung in transluzenter oder opaker Form als Kochflächen oder Kochgeschirr und in transparenter Form als Brandschutzglas, Kaminsichtscheibe, Kochgeschirr oder Fenster für Pyrolyseherde.

Weißwert und Farbe im Lab-Farbsystem wurden mit einem Messgerät gegen einen schwarzen Hintergrund gemessen.

Die Prüfung der Temperaturunterschiedsfestigkeit von erfindungsgemäßen Glaskeramikplatten erfolgt in Anlehnung an die für die Anwendung als Kochfläche typische Belastungssituation. Ein für die Prüfung hinlänglich großer Teilausschnitt der zu prüfenden Glaskeramikplatte (üblicherweise ein quadratischer Ausschnitt mit den Maßen 250 mm x 250 mm) wurde horizontal gelagert. Die Unterseite der Glaskeramikplatte wurde mittels eines kreisförmigen konventionellen Strahlungsheizkörpers, wie er in Kochfeldem üblicherweise eingesetzt wird, beheizt, wobei eventuell vorhandene Temperaturbegrenzer außer Funktion gesetzt sind. Die Oberseite der Glaskeramikplatte wurde durch eine Metallhaube gegen äußere, den Meßvorgang störende Einflüsse abgeschirmt. Ebenfalls auf der Oberseite wurde die während des Beheizungsvorgangs allmählich ansteigende Oberflächentemperatur der Glaskeramikplatte gemessen, und zwar an der heißesten Stelle innerhalb der beheizungssystemtypischen inhomogenen Oberflächentemperaturverteilung. Der hinsichtlich seiner Temperaturunterschiedsfestigkeit zu prüfende Plattenkantenbereich hat dabei eine unbeheizte Mindestbreite - gemessen als Mindestabstand zwischen Plattenaußenkante und innerer Begrenzung des seitlichen Isolationsrandes des Stahlungsheizkörpers - entsprechend den kritischsten kochfeldüblichen Heizkörperpositionierungen. Während des Aufheizvorgangs gerät der unbeheizte äußere Bereich unter tangentiale Zugspannungen. Diejenige Temperatur an der oben beschriebenen Messposition, bei der die Glaskeramikplatte unter Wirkung der tangentialen Zugspannungen bricht, wurde als Kennwert für die Temperaturunterschiedsfestigkeit herangezogen.

Die Stoßfestigkeit wurde durch eine Kugelfallprüfung in Anlehnung an die DIN 52306 ermittelt. Als Messprobe wurde ein quadratischer (100 x 100 mm großer) Teilausschnitt der zu prüfenden Glaskeramikscheibe in einen Prüfrahmen eingelegt und eine 200 g schwere Stahlkugel auf die Mitte der Probe fallen gelassen. Die Fallhöhe wird stufenweise gesteigert, bis der Bruch eintritt. Aufgrund des statistischen Charakters der Stoßfestigkeit wurde diese Prüfung an einer Serie von etwa 10 Proben ausgeführt und der Mittelwert der gemessenen Bruchfallhöhen bestimmt.

Die vorliegende Erfindung wird mit Hilfe der folgenden Beispiele weiter verdeutlicht.

Die Ausgangsgläser wurden unter Verwendung von in der Glasindustrie üblichen Rohstoffen bei Temperaturen von ca. 1640 °C erschmolzen und geläutert. Die Formgebung fand nach den üblichen Verfahren z.B. Gießen oder Walzen statt.Gußstücke wurden beginnend ab ca. 680 °C in einem Kühlofen auf Raumtemperatur abgekühlt und in die für die Untersuchungen benötigte Größe unterteilt.

Tabelle 1 zeigt Zusammensetzungen von erfindungsgemäßen Gläsern und die niedrigen Gehalte an färbenden Verunreinigungen.

Tabelle 1:

| Zusammensetzung von Gläsern auf Oxidbasis in Gew.-% | | |
|---|---|---|
| | Glas Nr. 1 | Glas Nr. 2 |
| $Li_2O$ | 3,5 | 3,5 |
| $Na_2O$ | 0,2 | 0,15 |
| $K_2O$ | 0,2 | 0,2 |
| MgO | 1,2 | 1,15 |
| BaO | 1,0 | 0,8 |
| ZnO | 1,7 | 1,5 |
| $Al_2O_3$ | 20,2 | 20,0 |
| $SiO_2$ | 66,9 | 67,2 |
| $TiO_2$ | 2,7 | 2,6 |
| $ZrO_2$ | 1,7 | 1,7 |
| $As_2O_3$ | 0,7 | 1,2 |
| Summe | 100,0 | 100,0 |
| | | |
| Färbende Verunreinigungen | Glas Nr. 1 | Glas Nr. 2 |
| $V_2O_5$ | 6 ppm | - |
| $MoO_3$ | 2 ppm | - |
| CoO | <1 ppm | - |
| NiO | 4 ppm | - |
| $MnO_2$ | < 1 ppm | |
| $Cr_2O_3$ | < 10 ppm | - |

Aus den aufgeführten Gläsern wurden durch folgende Umwandlungen (Keramisierungen) erfindungsgemäße Glaskeramiken hergestellt:

Bei den Beispielen in Tabelle 2 werden insgesamt ca. 15 bis 20 Platten umgewandelt, aus denen Stoßfestigkeiten und Temperaturunterschiedsfestigkeiten gemittelt werden.

Beipiel1:

Plattenförmige Grünglasgegenstande der Dicke von 4 mm nach Zusammensetzung gemäß Glas Nr. 1 wurden von Raumtemperatur mit einer Heizrate von 11 K/min auf eine Temperatur von 840 °C gebracht und dort etwa 18 Minuten für die Kristallisation der Hochquarz-Mischkristalle gehalten. Anschließend wurde das Material mit 9,5 K/min auf eine Maximaltemperatur von 1065°C gebracht, die für 23 Minuten aufrecht gehalten wurde. Die transluzente Glaskeramik wurde mit einer Abkühlrate von ca. 12 K/min auf 950 °C abgekühlt und mit Ofenkennlinie ungeregelt weiter auf Raumtemperatur abgekühlt. In Tabelle 2 sind die resultierenden Eigenschaften der erhaltenen transluzenten Glaskeramik unter Beispiel 1 aufgeführt. Weisswert, Farbe und Stoßfestigkeit wurden an 4 mm dicken Proben bestimmt. Zur Messung der Lichttransmission wurde die Probe beidseitig poliert, die dadurch geringfügig unter 4 mm liegende Probendicke ist in Tabelle 2 aufgeführt.

Tabelle 2:

| Eigenschaften der umgewandelten Glaskeramiken | | | |
|---|---|---|---|
| Beispiel | 1 | 2 | 3 |
| Glas-Nr. | 1 | 1 | 1 |
| Lichttransmission $\tau$ (%) <br> Probendicke (mm) | 9,4 <br> 3,58 | 9,2 <br> 3,58 | 8,4 <br> 3,55 |
| Weißwert L* <br> Farbe C* <br> a* <br> b* | 83,1 <br> 5,2 <br> -3,3 <br> -4,1 | 82,9 <br> 5,5 <br> -3,4 <br> -4,3 | 84,0 <br> 4,6 <br> -3,1 <br> - 3,3 |
| Stoßfestigkeit (cm) | 23 | 25 | 26 |
| Temperaturunterschiedsfestigkeit (°C) | 735 | 689 | 725 |
| Thermischer Ausdehnungskoeffizient $\alpha$(20/700 °C) ($10^{-6}$/K) | 1,0 | - | - |

Beispiel 2:

Plattenförmige Grünglasgegenstande der Dicke 4 mm nach Zusammensetzung Glas Nr. 1, wurden mit folgendem Keramisierungsprogramm umgewandelt. Die 4 mm dicken Grünglasplatten wurden mit einer Heizrate von 11 K/min auf 805 °C gebracht und dort 23 Minuten gehalten. Anschließend wurde das Material mit 9,5 K/min auf eine Maximaltemperatur von 1060 °C und 23 Minuten Haltezeit erhitzt. Das Material wurde mit 12 K/min auf 950 °C abgekühlt und kühlte dann weiter mit Ofenkennlinie auf Raumtemperatur ab. Mit diesem Umwandlungsprogramm wurde eine transluzente Glaskeramik erhalten, die über die in Tabelle 2 aufgeführten Eigenschaften verfügt.

Beispiel 3:

Bei diesem Beispiel wurden plattenförmige Grünglasgegenstande der Dicke 4 mm nach Zusammensetzung gemäß Glas Nr. 1 verwendet. Die Grünglasplatten wurden mit 11 K/min auf 845 °C erhitzt. Das Material wurde bei dieser Temperatur 23 Minuten gehalten. Anschließend wurde das Material weiter mit 9,5 K/min auf eine Maximaltemperatur von 1060 °C erhitzt und dort für 23 Minuten gehalten. Die Abkühlung erfolgte mit 12 K/min auf 835 °C und von dort kühlte das Material weiter mit Ofenkennlinie auf Raumtemperatur ab. Die Eigenschaften der erhaltenen umgewandelten Glaskeramik sind in Tabelle 2 unter Beispiel 3 aufgeführt.

Beispiele 4 bis 12:

Bei diesen Beispielen wurden plattenförmige Grünglasgegenstände der Dicke ca. 4 mm mit einem einheitlichen Programm umgewandelt. Die Zusammensetzung der Beispiele entspricht der Zusammensetzung von Glas Nr. 1 aus Tabelle 1. Die plattenförmigen Proben wurden mit einer einheitlichen Heizrate von 7,5 K/min bis auf Maximaltemperatur aufgeheizt und dort gemäß den angegebenen Haltezeiten auf Maximaltemperatur gehalten. Während des Aufheizens mit konstanter Heizrate findet die Kristallisation der Hochquarz-Mischkristalle im Temperaturbereich zwischen 760 - 850 °C statt.
Tabelle 3 zeigt den Zusammenhang zwischen den Herstellbedingungen bei variierter Maximaltemperatur und Haltezeit, sowie den Eigenschaften Weißwert L*, Farbe (Probendicke 4 mm) , Lichttransmission $\tau$ (polierte Proben, Dicke wie in Tabelle 3 angegeben) und dem Auftreten von Oberflächenrissen. Es wird deutlich, dass mit der Erhöhung der Maximaltemperatur und/oder der Haltezeit der Weißwert L* erhöht und die Lichttransmission $\tau$ abgesenkt wird. Wird die Haltezeit bei vorgegebener Aufheizrate und der jeweiligen Maximaltemperatur zu lange gewählt, so reichert sich der $SiO_2$-Gehalt in den oberflächennahen Hochquarzen an und beim Abkühlen der Glaskeramik kommt es zu der unerwünschten Umwandlung der Hochquarz-Mischkristalle in die Tiefquarzstruktur. Die damit einhergehenden Oberflächenrisse senken die Stoßfestigkeit unter die geforderten Werte ab. Dies ist bei den Beispielen 5, 8, 10, 12 der Fall.

Tabelle 3:

| Herstellbedingungen und Eigenschaften von Glaskeramiken | | | | | | | | | | |
|---|---|---|---|---|---|---|---|---|---|---|
| Beispiel | | 4 | 5 | 6 | 7 | 8 | 9 | 10 | 11 | 12 |
| Glas-Nr. | | 1 | 1 | 1 | 1 | 1 | 1 | 1 | 1 | 1 |
| Maximal-Temperatur $T_{max}$(°C) | | 1040 | 1040 | 1050 | 1050 | 1050 | 1060 | 1060 | 1070 | 1070 |
| Haltezeit (min) | | 30 | 60 | 18 | 24 | 35 | 18 | 24 | 12 | 18 |
| Lichttransmission $\tau$ (%), | | 8,7 | 4,8 | 10,9 | 7,8 | 5,8 | 6,9 | 4,1 | 7,2 | 4,9 |
| Probendicke (mm) | | 3,59 | 3,59 | 3,56 | 3,57 | 3,59 | 3,59 | 3,60 | 3,60 | 3,59 |
| Weißwert Farbe | L* | 83,2 | 86,8 | - | 84,1 | 86,8 | 85,1 | 87,9 | 84,8 | 87,3 |
| | C* | 5,2 | 2,5 | - | 4,5 | 2,9 | 3,9 | 1,9 | 4,1 | 2,5 |
| | a* | - 3,3 | -1,8 | - | -2,9 | - 2,1 | -2,6 | -1,4 | -2,7 | -1,7 |
| | b* | -4,0 | -1,7 | - | - 3,4 | -1,9 | -2,9 | -1,3 | -3,1 | -1,7 |
| Oberflächenrisse | | Nein | Ja | Nein | Nein | Ja | Nein | Ja | Nein | Ja |

Figur 1 zeigt grafisch das Auftreten der Oberflächenrisse für die Proben aus Tabelle 3 bei zu langer Haltezeit. Anhand entsprechender Diagramme kann für jede Zusammensetzung bei vorgegebener Aufheizrate und Maximaltemperatur die zulässige Haltezeit empirisch ermittelt werden. Figur 2 zeigt, die mit der Dünnschichtröntgenbeugung ermittelte a-Gitterkonstante der oberflächennahen Quarzphase der Proben mit und ohne Oberflächenrisse. Der für die Umwandlung in die Tiefquarzstruktur kritische $SiO_2$-Gehalt von $\geq 80$ Gew% in den oberflächennahen Hochquarz-Mischkristallen tritt bei dieser Zusammensetzung auf, wenn die a-Gitterkonstante $\leq 5,02$ Å beträgt.

Beispiele 13 bis 17:

Bei diesen Beispielen wurden Gläser der Grundzusammensetzung von Glas 2 aus Tabelle 1 mit verschiedenen färbenden Komponenten dotiert und geschmolzen. Plattenförmige Grünglasgegenstände der Dicke 4 mm wurden bei einer Maximaltemperatur von 1020°C und einer Haltezeit von 1 Stunde umgewandelt. Tabelle 4 zeigt die mit den Dotierungen erhaltenen Farben, Lichttransmissionswerte (polierte Proben, 4 mm dick) und Weißwerte.

Tabelle 4:

| Eigenschaften von mit färbenden Komponenten dotierten Glaskeramiken | | | | | |
|---|---|---|---|---|---|
| Beispiel | 13 | 14 | 15 | 16 | 17 |
| Glas-Nr. | 2 | 2 | 2 | 2 | 2 |
| Dotierung (ppm) | | | | | |
| $V_2O_5$ | 55 | | | | |
| $MoO_3$ | | 30 | | | |
| $Fe_2O_3$ | | | 420 | | |
| $CeO_2$ | | | | 1700 | |
| CoO | | | | | 20 |
| NiO | | | | | 10 |
| $Cr_2O_3$ | | | | | 20 |

Tabelle 4:   (fortgesetzt)

| Eigenschaften von mit färbenden Komponenten dotierten Glaskeramiken | | | | | | |
|---|---|---|---|---|---|---|
| Beispiel | | 13 | 14 | 15 | 16 | 17 |
| Farbton | | Hellgrau | Blaugrau | Gelblich | Beige | Blaugrau |
| Lichttransmission $\tau$ (%), | | 7,6 | 4,4 | 5,8 | 9,9 | 10,9 |
| Weißwert Farbe | L* | 69,7 | 82,4 | 84,9 | 78,4 | 72,1 |
| | C* | 6,6 | 5.9 | 3,0 | 6,3 | 11,1 |
| | a* | -2,3 | -3,3 | -3,0 | -2,7 | -3,7 |
| | b* | -6,2 | -4,8 | -0,1 | 5,7 | -10,5 |

**Patentansprüche**

1. Transluzente Glaskeramik mit

   1.1 einer Lichttransmission im Sichtbaren von 0,5 bis 10 % bei 4 mm Probendicke,

   1.2 einer Stoßfestigkeit von größer 18 cm Bruchfallhöhe im Mittelwert geprüft mit einer 200 g schweren Stahlkugel im Kugelfalltest,

   1.3 einer Temperaturunterschiedsfestigkeit von größer 650 °C,

   1.4 Keatit-Mischkristallen als vorherrschende Kristallphase im Innern der Glaskeramik,

   1.5 Hochquarz-Mischkristallen als weitere Kristallphase in der Oberflächenschicht der Glaskeramik,

   1.6 einer thermischen Ausdehnung der Hochquarz-Mischkristalle die kleiner als die der Keatit-Mischkristalle ist, so dass ein Oberflächenzustand der Glaskeramik erzeugt wird, der der Entstehung von festigkeitserniedrigenden Oberflächenverletzungen entgegenwirkt, und

   1.7 einem $SiO_2$-Gehalt der Hochquarz-Mischkristalle der kleiner als 80 Gew.-% ist, so dass beim Abkühlen der Glaskeramik auf Raumtemperatur die Umwandlung der Hochquarz-Mischkristallphase zu einer unerwünschten Tiefquarz-Mischkristallphase, die zu Rissen in der Oberfläche der Glaskeramik führt, verhindert wird.

2. Glaskeramik nach Anspruch 1,
   **dadurch gekennzeichnet,**
   **dass** die Temperaturunterschiedsfestigkeit der Glaskeramik größer 700 °C ist.

3. Glaskeramik nach Anspruch 1 oder 2,
   **gekennzeichnet dadurch,**
   **dass** die Glaskeramik plattenförmig ist.

4. Glaskeramik nach wenigstens einem der Ansprüche 1 bis 3,
   **gekennzeichnet durch**
   eine Zusammensetzung in Gew.-% auf Oxidbasis von :

| | |
|---|---|
| $Li_2O$ | 3,0 - 4,0 |
| $Na_2O$ | 0 - 1,0 |
| $K_2O$ | 0 - 0,6 |
| $\Sigma\, Na_2O+K_2O$ | 0,2 - 1,0 |
| MgO | 0 - 1,5 |
| CaO | 0 - 0,5 |
| SrO | 0 - 1,0 |

(fortgesetzt)

| BaO | 0 - 2,5 |
|---|---|
| $\Sigma$ CaO+SrO+BaO | 0,2 - 3,0 |
| ZnO | 1,0 - 2,2 |
| $Al_2O_3$ | > 19,8 - 23 |
| $SiO_2$ | 66 - 70 |
| $TiO_2$ | 2,0 - 3,0 |
| $ZrO_2$ | 0,5 - 2,0 |
| $P_2O_5$ | 0 - 1,0 |

sowie gegebenenfalls Läutermittel, wie $As_2O_3$, $Sb_2O_3$, $SnO_2$, $CeO_2$ und/oder Sulfat- bzw. Chlorid-Verbindungen, in den üblichen Mengen.

5. Glaskeramik nach wenigstens einem der Ansprüche 1 bis 4,
**gekennzeichnet dadurch,**
**dass** an der unmittelbaren Oberfläche der Glaskeramik, oberhalb der Hochquarz-Mischkristalle enthaltenden Schicht, eine glasige Schicht mit erhöhten $Na_2O$-, $K_2O$- und/oder CaO-, SrO-, BaO-Gehalten vorliegt, die geeignet ist, die Glaskeramik insbesondere vor dem Angriff von Säure auf die Hochquarz-Mischkristalle zu schützen.

6. Glaskeramik nach Anspruch 5,
**dadurch gekennzeichnet,**
**dass** die glasige Schicht eine Dicke von 100 bis 600 nm aufweist.

7. Glaskeramik nach wenigsten einem der Ansprüche 1 bis 6,
**dadurch gekennzeichnet,**
**dass** die Hochquarz-Mischkristalle als Kristallphase enthaltende Oberflächenschicht eine Dicke von 0,1 bis 2,0 μm aufweist.

8. Glaskeramik nach wenigstens einem der Ansprüche 1 bis 7,
**gekennzeichnet dadurch,**
**dass** die mittlere Korngröße der Keatit-Mischkristalle im Inneren der Glaskeramik 0,3 μm bis 2 μm, bevorzugt 1 bis 1,5 μm beträgt.

9. Glaskeramik nach wenigstens einem der Ansprüche 1 bis 8,
**dadurch gekennzeichnet,**
**dass** die thermische Ausdehnung der Glaskeramik zwischen Raumtemperatur und 700 °C kleiner ist als $1,3 \cdot 10^{-6}$/K, bevorzugt kleiner als $1,1 \cdot 10^{-6}$/K ist.

10. Glaskeramik nach wenigstens einem der Ansprüche 1 bis 9,
**dadurch gekennzeichnet,**
**dass** die Glaskeramik einen Weißwert in Lab-System von L* > 83 aufweist.

11. Glaskeramik nach Anspruch 10,
**dadurch gekennzeichnet,**
**dass** die Glaskeramik einen sehr niedrigen Gehalt an färbenden Verunreinigungen wie $V_2O_5$ < 15 ppm, $MoO_3$ < 20 ppm, CoO < 10 ppm, NiO < 10 ppm aufweist und dass der Gesamtgehalt an den aufgeführten Verunreinigungen < 30 ppm ist.

12. Glaskeramik nach wenigstens einem der Ansprüche 1 bis 9,
**gekennzeichnet durch**
den Zusatz färbender Komponenten, wie V-, Cr-, Mn-, Ce-, Fe-, Co-, Cu-, Ni- und/oder Se-Cl-Verbindungen, um den weißen Farbton gezielt zu verändern.

13. Glaskeramik nach Anspruch 12,
**gekennzeichnet dadurch,**
**dass** die Glaskeramik zur Einstellung eines beigen Farbtons färbende Komponenten, wie $CeO_2$, $MnO_2$ und/oder

EP 1 170 264 B1

$Fe_2O_3$ enthält.

14. Verfahren zur Herstellung einer transluzenten, im wesentlichen plattenförmigen Glaskeramik mit

einer Lichttransmission im Sichtbaren von 0,5 - 10 % bei 4 mm Probendicke,

einer Stoßfestigkeit von größer 18 cm Bruchfallhöhe im Mittelwert geprüft mit einer 200g schweren Stahlkugel im Kugelfalltest,

einer Temperaturunterschiedsfestigkeit von größer 650 °C,

Keatit-Mischkristallen als vorherrschende Kristallphase im Innern der Glaskeramik,

Hochquarz-Mischkristallen als weitere Kristallphase in der Oberflächenschicht der Glaskeramik,

einer thermischen Ausdehnung der Hochquarz-Mischkristalle die kleiner als die der Keatit-Mischkristalle ist, so dass ein Oberflächenzustand der Glaskeramik erzeugt wird, die der Entstehung von festigkeitserniedrigenden Oberflächenverletzungen entgegenwirkt,

einem $SiO_2$-Gehalt der Hochquarz-Mischkristalle der kleiner als 80 Gew.-% ist, so dass beim Abkühlen der Glaskeramik auf Raumtemperatur die Umwandlung der Hochquarz-Mischkristallphase zu einer unerwünschten Tiefquarz-Mischkristallphase. die zu Rissen in der Oberfläche der Glaskeramik führt, verhindert wird,

wobei der Schichtaufbau mit Keatit-Mischkristallen als vorherrschende Kristallphase im Innern der Glaskeramik und Hochquarz-Mischkristallen als vorherrschende Kristallphase in der Oberflächenschicht der Glaskeramik dadurch erzeugt wird,

dass der Temperaturbereich der Keimbildung von Zr/Ti-haltigen Keimkristallen von 650 bis 760 °C mit hohen Heizraten von größer 7 K/min durchfahren wird,

die Kristallisation der Hochquarz-Mischkristallphase bei einer Temperatur von 760 bis 850 °C durchgeführt wird,

und die Aufenthaltszeit im Temperaturbereich zwischen 650 bis 850 °C weniger als 60 Minuten beträgt.

15. Verfahren nach Anspruch 14,
**dadurch gekennzeichnet,**
**daß** ein Glas der Zusammensetzung (in Gew.-% auf Oxidbasis):

| | |
|---|---|
| $Li_2O$ | 3,0 - 4,0 |
| $Na_2O$ | 0-1,0 |
| $K_2O$ | 0 - 0,6 |
| $\Sigma$ $Na_2O+K_2O$ | 0,2 - 1,0 |
| MgO | 0 - 1,5 |
| CaO | 0 - 0,5 |
| SrO | 0 - 1,0 |
| BaO | 0 - 2,5 |
| $\Sigma$ $CaO+SrO+BaO$ | 0,2 - 3,0 |
| ZnO | 1,0 - 2,2 |
| $Al_2O_3$ | > 19,8 - 23 |
| $SiO_2$ | 66 - 70 |
| $TiO_2$ | 2,0 - 3,0 |
| $ZrO_2$ | 0,5 - 2,0 |
| $P_2O_5$ | 0 -1,0 |

sowie gegebenenfalls Läutermittel in den üblichen Mengen, wie $AS_2O_3$, $Sb_2O_3$, $SnO_2$, $CeO_2$ und/oder Sulfat- bzw.

12

**EP 1 170 264 B1**

Chlorid-Verbindungen, keramisiert wird.

16. Verfahren nach Anspruch 14 oder 15,
   **gekennzeichnet dadurch,**
   **daß** die Umwandlung der Hochquarz-Mischkristallphase in die Keatit-Mischkristallphase im Inneren der Glaskeramik bei Maximaltemperaturen von 1000 bis 1100 °C durchgeführt wird und die Aufheizrate und die Haltezeit bei der Maximaltemperatur so gewählt werden, dass sich die in Oberflächennähe gebildeten Hochquarz-Mischkristalle beim Abkühlen auf Raumtemperatur nicht in Tiefquarz-Mischkristalle umwandeln.

17. Verfahren nach wenigstens einem der Ansprüche 14 bis 16, wobei die Glaskeramik jedoch opak ist,
   **gekennzeichnet dadurch,**
   **dass** die Keramisierung der Glaskeramik bei höheren Temperaturen als 1100 °C durchgeführt wird und die resultierende Glaskeramik eine Lichttransmission im Sichtbaren von < 0,5 % bei 4 mm Probendicke aufweist.

18. Verfahren nach wenigstens einem der Ansprüche 14 bis 16, wobei die Glaskeramik jedoch transparent ist,
   **gekennzeichnet dadurch,**
   **dass** die Keramisierung der Glaskeramik bei niedrigeren Temperaturen als 1000 °C durchgeführt wird und die resultierende Glaskeramik eine Lichttransmission im Sichtbaren von > 80 % bei 4 mm Probendicke aufweist, wobei die Glaskeramik im wesentlichen Hochquarz-Mischkristalle als vorherrschende Kristallphase aufweist.

19. Verwendung einer Glaskeramik nach wenigstens einem der vorhergehenden Ansprüche in transluzenter oder opaker Form als Kochfläche oder Kochgeschirr und in transparenter Form als Brandschutzglas, Kaminsichtscheibe, Kochgeschirr oder Fenster für Pyrolyseherde.

**Claims**

1. Translucent glass-ceramic, having

   1.1 a light transmission in the visible region of 0.5 to 10% at a 4 mm specimen thickness,

   1.2 an impact strength of greater than 18 cm fracture impact height on average tested using a 200 g steel ball in the ball impact test,

   1.3 a temperature difference strength of greater than 650°C,

   1.4 keatite solid solution as the main crystal phase in the interior of the glass-ceramic,

   1.5 beta-quartz solid solution as further crystal phase in the surface layer of the glass-ceramic,

   1.6 a thermal expansion of the beta-quartz solid solution which is lower than that of the keatite solid solution, so that a glass-ceramic surface state which counteracts the formation of strength-reducing surface dislocations is produced, and

   1.7 an $SiO_2$ content in the beta-quartz solid solution which is lower than 80% by weight, so that when the glass-ceramic is cooled to room temperature transformation of the beta-quartz solid solution phase to an undesirable alpha-quartz solid solution phase, which leads to cracks in the surface of the glass-ceramic, is prevented.

2. Glass-ceramic according to Claim 1, **characterized in that** the temperature difference strength of the glass-ceramic is greater than 700°C.

3. Glass-ceramic according to Claim 1 or 2, **characterized in that** the glass-ceramic is in plate form.

4. Glass-ceramic according to at least one of Claims 1 to 3, **characterized by** a composition, in % by weight, based on oxide, of:

| Li$_2$O | 3.0 - 4.0 |
|---|---|
| Na$_2$O | 0 - 1.0 |
| K$_2$O | 0 - 0.6 |
| Σ Na$_2$O+K$_2$O | 0.2 - 1.0 |
| MgO | 0 - 1.5 |
| CaO | 0 - 0.5 |
| SrO | 0 - 1.0 |
| BaO | 0 - 2.5 |
| Σ CaO+SrO+BaO | 0.2 - 3.0 |
| ZnO | 1.0 - 2.2 |
| Al$_2$O$_3$ | > 19.8 - 23 |
| SiO$_2$ | 66 - 70 |
| TiO$_2$ | 2.0 - 3.0 |
| ZrO$_2$ | 0.5 - 2.0 |
| P$_2$O$_5$ | 0 - 1.0 |

and if appropriate refining agents, such as As$_2$O$_3$, Sb$_2$O$_3$, SnO$_2$, CeO$_2$ and/or sulphate or chloride compounds, in the standard quantities.

5. Glass-ceramic according to at least one of Claims 1 to 4, **characterized in that** a vitreous layer with increased Na$_2$O, K$_2$O and/or CaO, SrO, BaO contents, which is suitable for protecting the glass-ceramic in particular from acid attack on the beta-quartz solid solution, is present at the immediate surface of the glass-ceramic, above the layer which contains beta-quartz solid solution.

6. Glass-ceramic according to Claim 5, **characterized in that** the vitreous layer has a thickness of 100 to 600 nm.

7. Glass-ceramic according to at least one of Claims 1 to 6, **characterized in that** the beta-quartz solid solution, as a surface layer which contains a crystalline phase, has a thickness of 0.1 to 2.0 μm.

8. Glass-ceramic according to at least one of Claims 1 to 7, **characterized in that** the mean grain size of the keatite solid solution in the interior of the glass-ceramic is 0.3 μm to 2 μm, preferably 1 to 1.5 μm.

9. Glass-ceramic according to at least one of Claims 1 to 8, **characterized in that** the thermal expansion of the glass-ceramic between room temperature and 700°C is less than 1.3·10$^{-6}$/K, preferably less than 1.1·10$^{-6}$/K.

10. Glass-ceramic according to at least one of Claims 1 to 9, **characterized in that** the glass-ceramic has a lab system white level of L*>83.

11. Glass-ceramic according to Claim 10, **characterized in that** the glass-ceramic contains a very low level of colouring impurities, such as V$_2$O$_5$ < 15 ppm, MoO$_3$ < 20 ppm, CoO < 10 ppm, NiO < 10 ppm, and **in that** the total level of the impurities listed is < 30 ppm.

12. Glass-ceramic according to at least one of Claims 1 to 9, **characterized by** the addition of colouring components, such as V-, Cr-, Mn-, Ce-, Fe-, Co-, Cu-, Ni- and/or Se-Cl compounds, in order to deliberately alter the white hue.

13. Glass-ceramic according to Claim 12, **characterized in that** the glass-ceramic contains colouring components used to establish a beige hue, such as CeO$_2$, MnO$_2$ and/or Fe$_2$O$_3$.

14. Process for producing a translucent glass-ceramic which is substantially in plate form and has

a light transmission in the visible region of 0.5 to 10% at a 4 mm specimen thickness,

an impact strength of greater than 18 cm fracture impact height on average tested using a 200 g steel ball in the ball impact test,

a temperature difference strength of greater than 650°C,

keatite solid solution as the main crystal phase in the interior of the glass-ceramic,

beta-quartz solid solution as further crystal phase in the surface layer of the glass-ceramic,

a thermal expansion of the beta-quartz solid solution which is lower than that of the keatite solid solution, so that a glass-ceramic surface state which counteracts the formation of strength-reducing surface dislocations is produced, and

an $SiO_2$ content in the beta-quartz solid solution which is lower than 80% by weight, so that when the glass-ceramic is cooled to room temperature transformation of the beta-quartz solid solution phase to an undesirable alpha-quartz solid solution phase, which leads to cracks in the surface of the glass-ceramic, is prevented,

the layer structure with keatite solid solution as the main crystal phase in the interior of the glass-ceramic and beta-quartz solid solution as the main crystal phase in the surface layer of the glass-ceramic being produced by

the temperature range for the nucleation of Zr/Ti-containing nucleating agents of from 650 to 760°C being passed through at high heating rates of greater than 7 K/min,

the crystallization of the beta-quartz solid solution phase being carried out at a temperature of from 760 to 850°C,

and the holding time in the temperature range between 650 and 850°C being less than 60 minutes.

15. Process according to Claim 14, **characterized in that** a glass with a composition (in % by weight, based on oxide) of:

| | |
|---|---|
| $Li_2O$ | 3.0 - 4.0 |
| $Na_2O$ | 0 - 1.0 |
| $K_2O$ | 0 - 0.6 |
| E $Na_2O+K_2O$ | 0.2 - 1.0 |
| MgO | 0 - 1.5 |
| CaO | 0 - 0.5 |
| SrO | 0 - 1.0 |
| BaO | 0 - 2.5 |
| $\Sigma$ CaO+SrO+BaO | 0.2 - 3.0 |
| ZnO | 1.0 - 2.2 |
| $Al_2O_3$ | > 19.8 - 23 |
| $SiO_2$ | 66 - 70 |
| $TiO_2$ | 2.0 - 3.0 |
| $ZrO_2$ | 0.5 - 2.0 |
| $P_2O_5$ | 0 - 1.0 |

and if appropriate refining agents in the standard quantities, such as $As_2O_3$, $Sb_2O_3$, $SnO_2$, $CeO_2$ and/or sulphate or chloride compounds, is ceramicized.

16. Process according to Claim 14 or 15, **characterized in that** the transformation of the beta-quartz solid solution phase into the keatite solid solution phase in the interior of the glass-ceramic is carried out at maximum temperatures of 1 000 to 1 100°C, and the heat-up rate and the holding time at the maximum temperature are selected in such a way that the beta-quartz solid solution formed close to the surface is not transformed into alpha-quartz solid solution during cooling to room temperature.

17. Process according to at least one of Claims 14 to 16, but in which the glass-ceramic is opaque, **characterized in that** the ceramicization of the glass-ceramic is carried out at temperatures higher than 1 100°C, and the resulting glass-ceramic has a light transmission in the visible region of < 0.5% for a 4 mm specimen thickness.

**18.** Process according to at least one of Claims 14 to 16, but in which the glass-ceramic is transparent, **characterized in that** the ceramicization of the glass-ceramic is carried out at temperatures lower than 1 000°C, and the resulting glass-ceramic has a light transmission in the visible region of > 80% for a 4 mm specimen thickness, the glass-ceramic substantially including beta-quartz solid solution as the main crystal phase.

**19.** Use of a glass-ceramic according to at least one of the preceding claims in translucent or opaque form as a cooking surface or cooking pots and in transparent form as fireproof glass, lorry windscreens, cooking pots or windows for pyrolysis ovens.

## Revendications

**1.** Vitrocéramique translucide avec

1.1 une transmission lumineuse dans le visible de 0,5 à 10% pour un échantillon de 4 mm d'épaisseur,
1.2 une résistance aux chocs, testée avec une sphère d'acier d'un poids de 200 g dans un test de chute de sphère, supérieure à une hauteur de chute de 18 cm en valeur moyenne,
1.3 une résistance aux différences de température supérieure à 650°C,
1.4 des cristaux mixtes de kéatite comme phase cristalline prédominante à l'intérieur de la vitrocéramique,
1.5 des cristaux mixtes de quartz bêta comme autre phase cristalline dans la couche superficielle de la vitrocéramique,
1.6 une dilatation thermique des cristaux mixtes de quartz bêta inférieure à celle des cristaux mixtes de kéatite de telle sorte que l'on crée un état de surface de la vitrocéramique qui s'oppose à l'apparition de défauts de surface qui abaissent sa résistance mécanique, et
1.7 une teneur en $SiO_2$ des cristaux mixtes de quartz bêta inférieure à 80% en poids de manière à empêcher lors du refroidissement de la vitrocéramique à température ambiante la conversion de la phase cristalline mixte de quartz bêta en une phase cristalline mixte de quartz alpha non souhaitée qui conduit à des fissures dans la surface de la vitrocéramique.

**2.** Vitrocéramique selon la revendication 1, **caractérisée en ce que** la résistance de la vitrocéramique aux différences de température est supérieure à 700°C.

**3.** Vitrocéramique selon la revendication 1 ou 2, **caractérisée en ce que** la vitrocéramique présente la forme de plaques.

**4.** Vitrocéramique selon au moins l'une des revendications 1 à 3, **caractérisée par** une composition en % en poids sur base des oxydes de:

| | |
|---|---|
| $Li_2O$ | 3,0-4,0 |
| $Na_2O$ | 0-1,0 |
| $K_2O$ | 0-0,6 |
| $\Sigma Na_2O+K_2O$ | 0,2-1,0 |
| MgO | 0-1,5 |
| CaO | 0-0,5 |
| SrO | 0-1,0 |
| BaO | 0-2,5 |
| $\Sigma CaO+SrO+BaO$ | 0,2-3,0 |
| ZnO | 1,0-2,2 |
| $Al_2O_3$ | >19,8-23 |
| $SiO_2$ | 66-70 |
| $TiO_2$ | 2,0-3,0 |
| $ZrO_2$ | 0,5-2,0 |
| $P_2O_5$ | 0-1,0 |

ainsi qu'éventuellement des agents d'affinage tels que $As_2O_3$, $Sb_2O_3$, $SnO_2$, $CeO_2$ et/ou des composés de sulfate ou de chlorure, dans les quantités habituelles.

**5.** Vitrocéramique selon au moins l'une des revendications 1 à 4, **caractérisée en ce que** sur la surface directe de la vitrocéramique, au-dessus de la couche contenant des cristaux mixtes de quartz bêta, se trouve une couche vitreuse à plus forte teneur en $Na_2O$, $K_2O$ et/ou CaO, SrO, BaO, qui convient pour protéger la vitrocéramique en particulier de l'attaque d'acides sur les cristaux mixtes de quartz bêta.

**6.** Vitrocéramique selon la revendication 5, **caractérisée en ce que** la couche vitreuse présente une épaisseur de 100 à 600 nm.

**7.** Vitrocéramique selon au moins l'une des revendications 1 à 6, **caractérisée en ce que** les cristaux mixtes de quartz bêta qui constituent la couche superficielle contenant une phase cristalline présentent une épaisseur de 0,1 à 2,0 µm.

**8.** Vitrocéramique selon au moins l'une des revendications 1 à 7, **caractérisée en ce que** la taille moyenne des grains des cristaux mixtes de kéatite à l'intérieur de la vitrocéramique vaut de 0,3 µm à 2 µm, de préférence de 1 à 1,5 µm.

**9.** Vitrocéramique selon au moins l'une des revendications 1 à 8, **caractérisée en ce que** la dilatation thermique de la vitrocéramique entre la température ambiante et 700°C est inférieure à $1,3.10^{-6}$/K, de préférence inférieure à $1,1.10^{-6}$/K.

**10.** Vitrocéramique selon au moins l'une des revendications 1 à 9, **caractérisée en ce que** la vitrocéramique présente sur un système de laboratoire un indice de blanc L* > 83.

**11.** Vitrocéramique selon la revendication 10, **caractérisée en ce que** la vitrocéramique présente une teneur très faible en impuretés colorantes telles que $V_2O_5$ < 15 ppm, $MoO_3$ < 20 ppm, CoO < 10 ppm, NiO < 10 ppm et **en ce que** la teneur totale en les impuretés ci-dessus est < 30 ppm.

**12.** Vitrocéramique selon au moins l'une des revendications 1 à 9, **caractérisée par** l'addition de composants colorants, par exemple des composés chlorés de V, Cr, Mn, Ce, Fe, Co, Cu, Ni et/ou Se pour modifier la teinte blanche de façon contrôlée.

**13.** Vitrocéramique selon la revendication 12, **caractérisée en ce que** la vitrocéramique contient pour l'établissement d'une coloration beige des composants colorants tels que $CeO_2$, $MnO_2$ et/ou $Fe_2O_3$.

**14.** Procédé pour la fabrication d'une vitrocéramique translucide, essentiellement en forme de plaque, avec

une transmission lumineuse dans le visible de 0,5 à 10% pour un échantillon de 4 mm d'épaisseur,
une résistance aux chocs, testée avec une sphère d'acier d'un poids de 200 g dans un test de chute de sphère, supérieure à une hauteur de chute de 18 cm en valeur moyenne,
une résistance aux différences de température supérieure à 650°C,
des cristaux mixtes de kéatite comme phase cristalline prédominante à l'intérieur de la vitrocéramique,
des cristaux mixtes de quartz bêta comme autre phase cristalline dans la couche superficielle de la vitrocéramique,
une dilatation thermique des cristaux mixtes de quartz bêta inférieure à celle des cristaux mixtes de kéatite de telle sorte que l'on crée un état de surface de la vitrocéramique qui s'oppose à l'apparition de défauts de surface qui abaissent sa résistance mécanique,
une teneur en $SiO_2$ des cristaux mixtes de quartz bêta inférieure à 80% en poids de manière à empêcher lors du refroidissement de la vitrocéramique à température ambiante la conversion de la phase cristalline mixte de quartz bêta en une phase cristalline mixte de quartz alpha non souhaitée qui conduit à des fissures dans la surface de la vitrocéramique,
la structure des couches à cristaux mixtes de kéatite comme phase cristalline prédominante à l'intérieur de la vitrocéramique et à cristaux mixtes de quartz bêta comme phase cristalline prédominante dans la couche superficielle de la vitrocéramique étant créée par le fait que
la plage de température de formation des germes de cristaux contenant Zr/Ti, de 650 à 760°C, est traversée à des vitesses de chauffage élevées supérieures à 7 K/min,
la cristallisation de la phase cristalline mixte de quartz bêta est réalisée à une température de 760 à 850°C,
et le temps de séjour dans la plage de température comprise entre 650 et 850°C est inférieure à 60 minutes.

**15.** Procédé selon la revendication 14, **caractérisé en ce qu'**un verre d'une composition (en % en poids sur base des oxydes) de:

| | |
|---|---|
| $Li_2O$ | 3,0-4,0 |
| $Na_2O$ | 0-1,0 |
| $K_2O$ | 0-0,6 |
| $\Sigma Na_2O+K_2O$ | 0,2-1,0 |
| MgO | 0-1,5 |
| CaO | 0-0,5 |
| SrO | 0-1,0 |
| BaO | 0-2,5 |
| $\Sigma CaO+SrO+BaO$ | 0,2-3,0 |
| ZnO | 1,0-2,2 |
| $Al_2O_3$ | >19,8-23 |
| $SiO_2$ | 66-70 |
| $TiO_2$ | 2,0-3,0 |
| $ZrO_2$ | 0,5-2,0 |
| $P_2O_5$ | 0-1,0 |

ainsi qu'éventuellement des agents d'affinage tels que $As_2O_3$, $Sb_2O_3$, $SnO_2$, $CeO_2$ et/ou des composés de sulfate ou de chlorure, dans les quantités habituelles, est céramisé.

**16.** Procédé selon la revendication 14 ou 15, **caractérisé en ce que** la conversion de la phase cristalline mixte de quartz bêta en la phase cristalline mixte de kéatite à l'intérieur de la vitrocéramique est réalisée à des températures maximales de 1 000 à 1 100°C, la vitesse de chauffage et le temps de séjour à la température maximale étant sélectionnés de telle sorte que les cristaux mixtes de quartz bêta formés à proximité de la surface ne se convertissent pas en cristaux mixtes de quartz alpha lors du refroidissement à température ambiante.

**17.** Procédé selon au moins l'une des revendications 14 à 16, dans lequel la vitrocéramique est cependant opaque, **caractérisé en ce que** la céramisation de la vitrocéramique est réalisée à des températures supérieures à 1 100°C et la vitrocéramique obtenue présente dans le visible une transmission lumineuse < 0,5% pour un échantillon de 4 mm d'épaisseur.

**18.** Procédé selon au moins l'une des revendications 14 à 16, dans lequel la vitrocéramique est cependant transparente, **caractérisé en ce que** la céramisation de la vitrocéramique est réalisée à des températures inférieures à 1 000°C et la vitrocéramique obtenue présente dans le visible une transmission lumineuse > 80% pour un échantillon de 4 mm d'épaisseur, la vitrocéramique présentant comme phase cristalline prédominante essentiellement des cristaux mixtes de quartz bêta.

**19.** Utilisation d'une vitrocéramique selon au moins l'une des revendications précédentes, sous forme translucide ou opaque, comme surface de cuisson ou ustensile de cuisson et sous forme transparente comme verre anti-feu, plaque de surveillance de cheminée, ustensile de cuisson ou fenêtres pour fours de pyrolyse.

Fig. 1

EP 1 170 264 B1

Fig. 2